# EUROPÄISCHE PATENTSCHRIFT

(11) **EP 3 209 990 B1**
(45) Veröffentlichungstag und Bekanntmachung des Hinweises auf die Patenterteilung: **27.12.2017**
(21) Anmeldenummer: 14795572.8
(22) Anmeldetag: 24.10.2014
(51) Int. Cl.: G01L 27/00, G01M 17/02, B60C 25/05, G01M 13/00

(54) **PRÜFVORRICHTUNG FÜR EINE REIFENFÜLLVORRICHTUNG**
TESTING DEVICE FOR A TIRE-FILLING DEVICE
DISPOSITIF DE TEST POUR UN DISPOSITIF DE GONFLAGE DE PNEUMATIQUES

(43) Veröffentlichungstag der Anmeldung: 30.08.2017
(73) Patentinhaber: Schenck RoTec GmbH, 64293 Darmstadt (DE)
(72) Erfinder: PEINELT, Andreas, 64319 Pfungstadt (DE); ROGALLA, Martin, 64297 Darmstadt (DE)
(74) Vertreter: Haar, Lucas Heinz Jörn
(86) Internationale Anmeldenummer: PCT/EP2014/072849
(87) Internationale Veröffentlichungsnummer: WO 2016/062350

(56) Entgegenhaltungen:
- EP-B1- 1 671 820
- US-A1- 2004 011 117
- US-A1- 2015 059 462

## Beschreibung

Die Erfindung betrifft eine Prüfvorrichtung für eine Reifenfüllvorrichtung mit einem an eine Seitenwand eines Reifens anlegbaren Füllring, durch dessen Ringöffnung unter Druck stehendes Gas in den Reifen geleitet werden kann, und einer dem Füllring gegenüber liegenden Dichteinrichtung.

Bei der automatischen Serienfertigung von Kraftfahrzeugrädern mit schlauchlosen Reifen werden zum Füllen der Reifen mit Druckluft in die Montagelinie integrierte automatische Reifenfüllvorrichtungen der aus EP 1 125 772 B1 und EP 1 671 820 B1 bekannten Art verwendet. Bei derartigen Vorrichtungen wird die Felge mit dem montierten Reifen auf eine geeignete Dichteinrichtung gelegt, die das Rad nach unten hin abdichtet. Auf die Reifenoberseite wird eine Füllglocke mit einem Füllring aufgesetzt, die den Reifen und die Felge nach oben hin abdichten. Beim Füllvorgang wird die Reifenseitenwand durch Absenken der Füllglocke mit dem Füllring so weit nach unten gedrückt, dass zwischen Reifenwulst und Felge ein Ringspalt entsteht, durch den die in die Füllglocke geleitete Druckluft in den Reifen einströmen kann. Ist der Fülldruck erreicht, so wird die Füllglocke angehoben, wodurch sich die Reifenseitenwände in axialer Richtung auseinander bewegen und die Reifenwulste ihre jeweilige Sitzposition auf der Felge einnehmen.

Der beschriebene Reifenfüllprozess unterliegt verschiedenen Einflüssen, von denen der Fülldruck des Reifens abhängig ist. Einflussfaktoren sind fertigungsbedingte Maßabweichungen, die der Reifen und die Felge haben dürfen, die Temperatur des Reifens und der Felge und der das Gleitverhalten der Reifenwülste bestimmende Reifenzustand. Felgen und Reifen werden auch in verschiedenen Kombinationen gepaart. Hiervon können der Reifenfüllvorgang und damit der Reifendruck ebenfalls abhängig sein. Neben diesen werkstückseitigen Einflüssen wird der Fülldruck der Reifen auch durch Einflüsse bestimmt, die von der Reifenfüllvorrichtung und ihrer Steuerung abhängig sind. Eine Trennung der Einflüsse der Reifenfüllvorrichtung von denjenigen, die durch die Werkstücke Reifen und Felge bedingt sind, ist in der Praxis aber nur schwer möglich. Ein anderes Beispiel einer Reifenfüllvorrichtung wird im Dokument US2004/0011117 beschrieben. Der Erfindung liegt daher die Aufgabe zugrunde, eine Prüfvorrichtung zu schaffen, die eine reproduzierbare und werkstückunabhängige Prüfung der Arbeitsweise einer Reifenfüllvorrichtung der angegebenen Art ermöglicht.

Nach der Erfindung wird diese Aufgabe durch eine Prüfvorrichtung mit den in Anspruch 1 angegebenen Merkmalen gelöst. Vorteilhafte Ausgestaltungen der Prüfvorrichtung sind in den weiteren Ansprüchen angegeben.

Die Prüfvorrichtung nach der Erfindung umfasst ein Gehäuse, das einen Boden und eine ringförmige Außenwand aufweist, die eine Füllkammer mit einer zylindrischen Innenfläche begrenzen, weiterhin einen Kolben, der an der zylindrischen Innenfläche bewegbar geführt und abgedichtet ist und der auf der dem Boden abgekehrten Seite eine ringförmige Anlagefläche zur dichten Anlage des Füllrings und radial innerhalb der Anlagefläche eine in das Gehäuse führende Kolbenöffnung aufweist, und wenigstens eine Feder, die zwischen dem Boden des Gehäuses und dem Kolben angeordnet ist und deren Federkraft bestrebt ist, den Kolben von dem Boden zu entfernen, sowie einen Drucksensor, der den Druck in einem mit unter Druck stehendem Gas füllbaren Innenraum des Gehäuses erfassen und in elektrische Größen umwandeln kann. An dem Gehäuse kann zusätzlich ein Temperatursensor angeordnet sein.

Die Prüfvorrichtung nach der Erfindung kann anstelle eines Rades in eine zu prüfende Reifenfüllvorrichtung derart eingesetzt werden, dass der Füllring an den Kolben anlegbar ist und der Boden auf der Dichteinrichtung gasdicht aufliegt. Mit der Reifenfüllvorrichtung kann dann ein Füllvorgang durchgeführt werden, wobei der Kolben mit seiner Anlagefläche an die Dichtfläche des Füllrings angedrückt wird und wie die Seitenwand eines zu füllenden Reifens den Bewegungen des Füllrings folgt. Während des Füllvorgangs können dann mittels der Sensoren der Druck im Füllraum und die Temperatur des Gehäuses gemessen und zeitabhängig aufgezeichnet werden. Auf diese Weise lässt sich eine von den durch den Reifen und die Felge hervorgerufenen physikalischen Einflüssen unabhängige Prüfung der Arbeitsweise der Reifenfüllvorrichtung durchführen.

Nach einem weiteren Vorschlag der Erfindung kann die Prüfvorrichtung eine am Boden des Gehäuses befestigte Ringwand aufweisen, die einen kleineren Durchmesser als die Außenwand hat und sich durch die zentral angeordnete Füllöffnung des Kolbens erstreckt, wobei die Ringwand an dem vom Boden entfernten Ende einen sich radial nach außen erstreckenden Flansch aufweist, der einen ersten Anschlag für den Kolben bildet, an dem der Kolben in axialer Richtung abstützbar und mittels eines Dichtrings abdichtbar ist.

Durch diese Weiterbildung erhält die Prüfvorrichtung einen vom Füllraum abtrennbaren Ringraum, der wie ein von einer Felge und einem Reifen gebildete und mit Druckgas zu füllende Ringraum am Ende des Füllvorgangs durch gesteuertes Zurückfahren des Füllrings geschlossen wird. Hierdurch kann der den Füllvorgang beendende Schließvorgang, bei dem der Reifenwulst mit der Sitzfläche der Felge in Dichteingriff kommt, mit Hilfe der Prüfvorrichtung nachvollzogen und geprüft und studiert werden. Selbstverständlich sind bei dieser Ausführungsvariante die Sensoren so an die Prüfvorrichtung angeschlossen, dass sie ausschließlich oder zusätzlich den Druck und die Temperatur in dem zwischen der Außenwand und der Ringwand gebildeten Ringraum erfassen.

Die Außenwand der Prüfvorrichtung kann nach der Erfindung an dem vom Boden entfernten Ende einen sich radial nach innen erstreckenden Flansch aufweisen, der einen zweiten Anschlag für den Kolben bildet, an dem der Kolben in axialer Richtung zusätzlich abstützbar ist, wenn er sich in Anlage an einem ersten Anschlag befindet. Durch den zweiten Anschlag wird gewährleistet, dass die relativ hohen Kräfte aufgenommen werden können, die bei mit Druckgas gefülltem Ringraum den Kolben belasten. Auf den Kolben einwirkende Biege- oder Klemmkräfte, welche die axiale Bewegbarkeit des Kolbens beeinträchtigen könnten, werden auf diese Weise vermieden.

Die Abdichtung der Prüfvorrichtung gegenüber der Dichteinrichtung der Reifenfüllvorrichtung kann nach einem weiteren Vorschlag der Erfindung dadurch zuverlässig bewirkt werden, dass der Boden auf seiner der Füllkammer abgekehrten Unterseite einen Ringwulst oder mehrere Ringwulste aufweist, die an die plattenförmige Dichteinrichtung der Reifenfüllvorrichtung anlegbar sind.

Zur guten Abdichtung des Kolbens gegenüber dem Füllring kann nach der Erfindung die Anlagefläche des Kolbens eine Auflage aus Elastomer aufweisen.

Zur Abdichtung des Kolbens an dem ersten Anschlag kann der Kolben am radial inneren Rand der Anlagefläche mit einem in einer Ringnut angeordneten Dichtring versehen sein, der dichtend an den ersten Anschlag anlegbar ist. Vorzugsweise ist zur Gewährleistung einer gleichmäßigen Abstützung des Kolbens an dem ersten und zweiten Anschlag in einer am radial äußeren Rand der Anlagefläche angeordneten weiteren Ringnut ebenfalls ein an den zweiten Anschlag anlegbarer Dichtring angeordnet.

Eine leichte Bewegbarkeit des Kolbens gegenüber dem Gehäuse kann nach der Erfindung durch eine mit der zylindrischen Innenfläche zusammenwirkende ballige Mantelfläche erzielt werden. Hierdurch kann der Kolben sich an dem Füllring ausrichten, ohne dass die Gefahr besteht, dass Zwangskräfte auftreten.

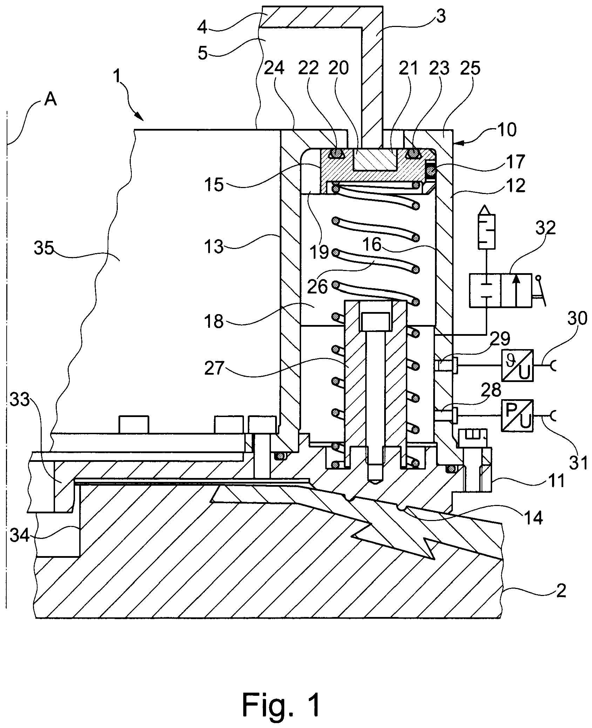

Ein bevorzugtes Ausführungsbeispiel der Erfindung ist in der Zeichnung dargestellt und wird im Folgenden näher beschrieben.

Die Zeichnung zeigt einen Querschnitt durch eine Prüfvorrichtung 1, die zwischen einer plattenförmigen Dichteinrichtung 2 und einem Füllring 3 einer bekannten, nicht näher dargestellten Reifenfüllvorrichtung angeordnet ist. Der Füllring 3 ist Teil einer Füllglocke 4, die durch Antriebsmittel längs einer Achse A bewegbar ist. Der Innenraum 5 der Füllglocke 4 ist über Druckleitungen und Ventile einer Steuereinrichtung mit einer Druckluftquelle oder mit der Atmosphäre verbindbar. Zur Funktionsweise und weiteren Merkmalen der Reifenfüllvorrichtung wird auf die Patentschrift EP 1 125 772 B1 verwiesen, deren Inhalt hiermit in die Anmeldung einbezogen wird.

Die Prüfvorrichtung 1 hat ein ringförmiges Gehäuse 10, das aus einem Boden 11, einer zylindrischen Außenwand 12 und einer ebenfalls zylindrischen Ringwand 13 zusammengesetzt ist. Beide Wände 12, 13 sind an dem Boden 11 mittels Schrauben befestigt und durch geeignete Dichtmittel abgedichtet. Die Ringwand 13 hat einen Außendurchmesser, der kleiner ist als der Innendurchmesser der Außenwand 12. und ist konzentrisch zur Außenwand 12 und zur Achse A angeordnet. Der Boden 11 weist auf seiner Unterseite zwei Ringwulste 14 auf, mit denen er druckdicht an der Dichteinrichtung 2 abstützbar ist. Zur Zentrierung der Prüfvorrichtung in einer Reifenfüllvorrichtung können an dem Boden 11 Zentriermittel, z.B. eine Zentrierstufe oder eine Zentrierbohrung vorhanden sein.

In dem zwischen der Außenwand 12 und der Ringwand 13 vorhandenen Innenraum befindet sich ein ringförmiger Kolben 15, der an einer zylindrischen Innenfläche 16 der Außenwand 12 bewegbar geführt und mittels eines Dichtrings 17 abgedichtet ist. Die Mantelfläche des Kolbens 15 ist zur Vermeidung von Zwangskräften ballig ausgebildet. Der Kolben 15 hat eine zentrale Kolbenöffnung 19, durch die sich die Ringwand 13 erstreckt. Der Innendurchmesser der Kolbenöffnung 19 ist größer als der Außendurchmesser der Ringwand 13, damit Druckluft aus der Füllglocke 4 durch die Kolbenöffnung 19 in den Innenraum 18 zwischen dem Kolben 15 und dem Boden 11 gelangen und diesen füllen kann.

Die dem Boden 11 abgewandte Stirnfläche des Kolbens 15 bildet eine ringförmige Anlagefläche 20 für die Dichtkante des Füllrings 3. Zur Verbesserung der Abdichtung zwischen dem Füllrings 3 und dem Kolben 15 weist die Anlagefläche 20 des Kolbens 15 eine Auflage 21 aus elastomerem Material auf, die in eine Ringnut in der Stirnfläche eingesetzt ist. Radial innerhalb und radial außerhalb der Auflage 21 sind in Ringnuten in der Stirnfläche des Kolbens 15 Dichtringe 22, 23 angeordnet.

Die Ringwand 13 weist an ihrem dem Boden 11 entgegengesetzten Ende einen sich radial nach außen erstreckenden Flansch 24 auf, der einen größeren Außendurchmesser hat als die Kolbenöffnung und dem radial inneren Randbereich der Stirnfläche des Kolbens 15 und dem dort angeordneten Dichtring 22 gegenüber liegt. Der Flansch bildet einen ersten Anschlag für den Kolben 15 und begrenzt die Axialbewegung des Kolbens 15 nach außen. Die Außenwand 12 ist an ihrem dem Boden 11 abgekehrten Ende mit einem sich radial nach innen erstreckenden Flansch 25 versehen, der dem radial äußeren Randbereich der Stirnfläche des Kolbens 15 und dem Dichtring 23 gegenüberliegt und einen zweiten Anschlag für den Kolben 15 bildet. Beide Flansche 24, 25 sind so angeordnet, dass der Kolben 15 an beiden Anschlägen im Wesentlichen gleichzeitig zur Anlage kommt und sich in der Anschlagstellung im Wesentlichen gleichmäßig an beiden Flanschen 24, 25 abstützt.

In radialer Richtung haben die Flansche 24, 25 einen Abstand voneinander, der im Wesentlichen der Breite der Anlagefläche 20 entspricht. Durch den hierdurch gebildeten Freiraum kann der Füllring 3 in den Ringraum zwischen den Flanschen 24, 25 und der Außenwand 12 und der Ringwand 13 eintauchen, um mit der Anlagefläche 20 des Kolbens 15 in Eingriff gebracht zu werden. Der Außendurchmesser des Flansches 24 ist kleiner bemessen als der Innendurchmesser des Füllrings 3, so dass zwischen dem Flansch 24 und dem Füllring 3 ein Ringspalt besteht, durch den Druckluft aus der Füllglocke 4 in den Innenraum 18 zwischen der Ringwand 13 und der Außenwand 12 einströmen kann, wenn der Kolben 15 von den Flanschen 24, 25 abgehoben ist.

Zwischen dem Kolben 15 und dem Boden 11 sind in dem Innenraum 18 mehrere Federn 26 in regelmäßigem Abstand voneinander angeordnet ist. Die Federn 26 sind so stark bemessen, dass sie den Kolben 15 in der Anschlagstellung mit einer definierten Kraft an die Flansche 24, 25 andrücken. Die Federn 26 sind an Stiften 27 geführt, die an dem Boden 11 befestigt sind und mit ihren freien Enden gemeinsam einen Anschlag für den Kolben 15 bilden. Der Druck in dem Innenraum 18 wird von einem Drucksensor 28 und die Temperatur des Gehäuses wird von einem Temperatursensor 29 gemessen. Beide Sensoren sind an der Außenwand 12 angeordnet und ihre Messwerte sind als elektrische Spannungen an Anschlüssen 30, 31 abnehmbar. Weiterhin ist an den Innenraum 18 ein Entlüftungsventil 32 angeschlossen, durch das der Innenraum 18 mit der Atmosphäre verbunden werden kann.

Zum Prüfen einer Reifenfüllvorrichtung wird die Prüfvorrichtung 1 anstelle einer Anordnung aus Felge und Reifen auf die Dichteinrichtung 2 der Reifenfüllvorrichtung aufgelegt und zur Achse A zentriert. Die Zentrierung erleichtert ein Ringbund 33, der in eine zentrische Bohrung 34 in der Dichteinrichtung 2 eingreift. Die Anschlüsse 31, 32 werden mit einer Auswerteeinrichtung zur Auswertung der von den Sensoren 28, 29 erzeugten Spannungen verbunden. Nach dem Start der Reifenfüllvorrichtung senkt diese programmgesteuert die Reifenfüllglocke 4, wodurch der Füllring 3 mit seiner Dichtkante an der Auflage 21 des Kolbens 15 zur Anlage kommt und dann, während er den Kolben 15 gegen die Kraft der Federn 26 in Richtung des Bodens 11 bewegt, in den Innenraum 18 eintaucht. In der eingetauchten Stellung umschließt die Füllglocke 4 zusammen mit dem Kolben 15, der Außenwand 12, dem Boden 11 und der Dichteinrichtung 2 einen Füllraum 35, der über den zwischen dem Füllring 3 und dem Flansch 24 vorhandenen Ringspalt und die Kolbenöffnung 19 auch mit dem Innenraum 18 in Verbindung steht. Durch steuerbare Zuführungen an der Füllglocke 4 kann nun in den Füllraum 35 und den Innenraum 18 Druckluft oder Druckgas eingeleitet werden, wobei der Druckanstieg und die Temperatur mittels der Sensoren 28, 29 gemessen werden und aufgezeichnet werden können.

Ist ein vorgegebener und von der Messeinrichtung der Reifenfüllvorrichtung gemessener Fülldruck erreicht, so wird die Füllglocke 4 so weit angehoben, bis sich der Kolben 15 mit dem Dichtring 22 an den Flansch 24 anlegt und dadurch den Innenraum 18 von dem Füllraum 35 trennt. Der Füllring 3 bleibt in Kontakt mit der Auflage 21 und hält den Füllraum 35 weiterhin geschlossen. Der Druck im Füllraum 35 kann nun gesteuert auf Atmosphärendruck abgesenkt werden. Danach fährt die Füllglocke 4 weiter nach oben, wodurch der Füllring 3 von der Auflage 21 des Kolbens 15 abgehoben und aus dem Freiraum zwischen den Flanschen 24, 25 entfernt wird.

In dem durch den Kolben 15 dicht verschlossenen Innenraum 18 bleibt der Fülldruck erhalten. Mit Hilfe des an den Innenraum 18 angeschlossenen Entlüftungsventils 32 kann der Innenraum 18 der Prüfvorrichtung 1 unabhängig von der Füllvorrichtung entlüftet werden. Alternativ ist eine Entlüftung des Innenraums 18 auch mit Hilfe der Füllvorrichtung möglich, indem vor dem Absenken des Drucks im Füllraum 35 durch erneutes Senken der Füllglocke 4 der Kolben 15 mit dem Dichtring 22 von dem Flansch 24 abgehoben und der Innenraum 18 wieder mit dem Füllraum 35 verbunden wird.

## Patentansprüche

1. Prüfvorrichtung für eine Reifenfüllvorrichtung, die einen an eine Seitenwand eines Reifens anlegbaren Füllring (3), durch dessen Ringöffnung unter Druck stehendes Gas in den Reifen geleitet werden kann und eine dem Füllring (3) gegenüber liegende Dichteinrichtung (2) hat, umfassend
ein Gehäuse (10), das einen Boden (11) und eine ringförmige Außenwand (12) mit einer zylindrischen Innenfläche (16) aufweist, die eine Füllkammer begrenzen, einen Kolben (15), der an der zylindrischen Innenfläche (16) bewegbar geführt und abgedichtet ist und der auf der dem Boden (11) abgekehrten Seite eine ringförmige Anlagefläche (20) zur dichten Anlage des Füllrings (3) und radial innerhalb der Anlagefläche (20) eine in das Gehäuse (10) führende Kolbenöffnung (19) aufweist, wenigstens eine Feder (26), die zwischen dem Boden (11) des Gehäuses (10) und dem Kolben (15) angeordnet ist und deren Federkraft bestrebt ist, den Kolben (15) von dem Boden zu entfernen, und einen Drucksensor (28), der den Druck in einem mit unter Druck stehendem Gas füllbaren Innenraum (18) des Gehäuses (10) erfassen und in elektrische Größen umwandeln kann.

2. Prüfvorrichtung nach Anspruch 1, **dadurch gekennzeichnet, dass** am Boden (11) des Gehäuses (10) eine Ringwand (13) befestigt ist, die einen kleineren Durchmesser als die Außenwand (12) hat und sich durch die zentral angeordnete Kolbenöffnung (19) erstreckt, wobei die Ringwand (13) an dem vom Boden entfernten Ende einen sich radial nach außen erstreckenden Flansch (24) aufweist, der einen ersten Anschlag für den Kolben (15) bildet, und der Kolben (15) durch die Kraft der Feder (26) an den ersten Anschlag andrückbar ist und in angedrückter Stellung mittels eines Dichtrings (22) an dem ersten Anschlag abdichtbar ist.

3. Prüfvorrichtung nach Anspruch 2, **dadurch gekennzeichnet, dass** die Außenwand (12) an dem vom Boden (11) entfernten Ende einen sich radial nach innen erstreckenden Flansch (25) aufweist, der einen zweiten Anschlag für den Kolben (15) bildet, an dem der Kolben in axialer Richtung abstützbar ist.

4. Prüfvorrichtung nach einem der vorhergehenden Ansprüche, **dadurch gekennzeichnet, dass** an der Außenwand ein Temperatursensor (29) zum Messen der Wandtemperatur angeordnet ist.

5. Prüfvorrichtung nach einem der vorhergehenden Ansprüche, **dadurch gekennzeichnet, dass** der Boden (11) auf der der Füllkammer abgekehrten Unterseite wenigstens einen Ringwulst (14) zur Abdichtung an der Dichteinrichtung (2) der Reifenfüllvorrichtung hat.

6. Prüfvorrichtung nach einem der vorhergehenden Ansprüche, **dadurch gekennzeichnet, dass** die Anlagefläche (20) des Kolbens (15) eine Auflage (21) aus Elastomer aufweist.

7. Prüfvorrichtung nach einem der Ansprüche 2 bis 5, **dadurch gekennzeichnet, dass** der Kolben (15) radial innerhalb der Anlagefläche (20) eine Ringnut aufweist, in welcher der Dichtring (22) angeordnet ist.

8. Prüfvorrichtung nach einem der Ansprüche 3 bis 6, **dadurch gekennzeichnet, dass** der Kolben (15) radial außerhalb der Anlagefläche einen in einer Ringnut angeordneten Dichtring (23) aufweist, der an den zweiten Anschlag anlegbar ist.

9. Prüfvorrichtung nach einem der vorhergehenden Ansprüche, **dadurch gekennzeichnet, dass** der Kolben (15) eine mit der zylindrischen Innenfläche (16) zusammenwirkende ballige Mantelfläche aufweist.

10. Prüfvorrichtung nach einem der vorhergehenden Ansprüche, **dadurch gekennzeichnet, dass** an den Innenraum (18) ein Entlüftungsventil (32) angeschlossen ist, durch das der Innenraum (18) mit der Atmosphäre verbindbar ist.

11. Prüfvorrichtung nach einem der vorhergehenden Ansprüche, **dadurch gekennzeichnet, dass** sie Zentriermittel zur Zentrierung in einer Reifenfüllvorrichtung aufweist.

## Claims

1. A testing device for a tire inflation device having an inflation ring (3) which is engageable against a sidewall of a tire and has an annular opening through which gas under pressure can be fed to the tire, and a sealing device (2) arranged opposite the inflation ring (3), comprising
a housing (10) which includes a bottom (11) and an annular outer wall (12) with a cylindrical inner surface (16) bounding an inflation chamber,
a piston (15) which is movably guided on the cylindrical inner surface (16), is sealed and has on the side facing away from the bottom (11) an annular engagement surface (20) for sealingly engaging the inflation ring (3) and radially within the engagement surface (20) has a piston opening (19) leading into the housing (10),
at least one spring (26) arranged between the bottom (11) of the housing (10) and the piston (15), its spring force seeking to move the piston (15) away from the bottom (11),
and a pressure sensor (28) capable of detecting the pressure in an inner chamber (18) of the housing (10) adapted to be filled with compressed gas and converting the pressure into electrical quantities.

2. The testing device according to claim 1, wherein an annular wall (13) is affixed to the bottom (11) of the housing (10) said wall having a diameter smaller than the outer wall (12) and extending through the centrally arranged piston opening (19), with the annular wall (13) including at its end remote from the bottom a radially outwardly extending flange (24) forming a first stop for the piston (15), said piston (15) being adapted to be urged against the first stop by the force of the spring (26) and being sealable on the first stop by means of a first sealing ring (22).

3. The testing device according to claim 2, wherein the outer wall (12) includes at the end remote from the bottom (11) a radially inwardly extending flange (25) which defines a second stop for the piston (15) and against which said piston (15) is able to bear in axial direction.

4. The testing device according to any one of the preceding claims, wherein a temperature sensor (29) for measuring the wall temperature is arranged on the outer wall.

5. The testing device according to any one of the preceding claims, wherein the bottom (11) has on its undersurface facing away from the inflation chamber at least one annular bead (14) for effecting a seal on the sealing device (2) of the tire inflation device.

6. The testing device according to any one of the preceding claims, wherein the engagement surface (20) of the piston (15) is provided with an elastomer pad (21).

7. The testing device according to any one of the claims 2 to 5, wherein the piston (15) includes radially inside the engagement surface (20) an annular groove accommodating the first sealing ring (22).

8. The testing device according to any one of the claims 3 to 6, wherein the piston (15) includes radially outside the engagement surface a second sealing ring (23) arranged in an annular groove and engageable with the second stop.

9. The testing device according to any one of the preceding claims, wherein the piston (15) has a spherical envelope surface cooperating with the cylindrical inner surface (16).

10. The testing device according to any one of the preceding claims, wherein a vent valve (32) by means of which the inner chamber (18) is connectible to atmosphere is connected to the inner chamber (18).

11. The testing device according to any one of the preceding claims, wherein it comprises centering aids for centering the testing device in a tire inflation device.

## Revendications

1. Dispositif de test pour un dispositif de gonflage de pneumatiques qui présente un anneau de gonflage (3) pouvant être appliqué sur une paroi latérale d'un pneumatique et à travers de son ouverture d'anneau un gaz sous pression peut être conduit dans le pneumatique, ainsi qu'un dispositif d'étanchéité (2) placé en face de l'anneau de gonflage (3), dispositif de test qui comprend :
un carter (10) qui comporte un fond (11) et une paroi externe (12) en forme d'anneau avec une surface interne cylindrique (16) qui délimite une chambre de remplissage, un piston (15) qui est guidé de manière mobile et étanchéifié sur la surface interne cylindrique (16) et qui comporte sur la face opposée au bond (11) une surface d'appui (20) en forme d'anneau pour l'application étanche de l'anneau de gonflage (3) et, à l'intérieur radialement de la surface d'appui (20), une ouverture de piston (19) conduisant dans le carter (10), au moins un ressort (26) disposé entre le fond (11) du carter (10) et le piston (15) et dont la force ressort tend à éloigner le piston (15) du fond, et un capteur de pression (28) qui peut mesurer la pression dans un espace interne (18) du carter (10) pouvant être rempli d'un gaz sous pression et qui la convertit en une grandeur électrique,

2. Dispositif de test selon la revendication 1, **caractérisé en ce qu'**une paroi annulaire (13) est fixée sur le fond (11) du carter (10), laquelle paroi présente un diamètre plus petit que la paroi externe (12) et s'étend à travers l'ouverture de piston (19) disposée de façon centrale, la paroi annulaire (13) comportant à l'extrémité éloignée du fond un flasque (24) s'étendant radialement vers l'extérieur et formant une première butée pour le piston (15), et le piston (15) pouvant être appuyé contre la première butée par la force du ressort (26) et pouvant être étanchéifié dans la position appuyée au moyen d'une bague d'étanchéité (22).

3. Dispositif de test selon la revendication 2, **caractérisé en ce que** la paroi externe (12) comporte à l'extrémité éloignée du fond (11) un flasque (15) s'étendant radialement vers l'intérieur et formant une deuxième butée pour le piston (15), butée contre laquelle le piston peut prendre appui en direction axiale.

4. Dispositif de test selon l'une des revendications précédentes, **caractérisé en ce qu'**un capteur de température (29) est disposé sur la paroi externe pour mesurer la température de la paroi.

5. Dispositif de test selon l'une des revendications précédentes, **caractérisé en ce que** le fond (11) a au moins un bourrelet annulaire (14) sur la face inférieure opposée à la chambra de remplissage pour l'étanchéité au niveau du dispositif d'étanchéité (2) du dispositif de gonflage de pneumatiques.

6. Dispositif de test selon l'une des revendications précédentes, **caractérisé en ce que** la surface d'appui (20) du piston (15) comporte un revêtement (21) en élastomère.

7. Dispositif de test selon l'une des revendications 2 à 5, **caractérisé en ce que** le piston (15) comporte, à l'intérieur radialement de la surface d'appui (20), une rainure annulaire dans laquelle est disposée la bague d'étanchéité (22).

8. Dispositif de test selon l'une des revendications 3 à 6, **caractérisé en ce que** le piston (15) comporte, à l'extérieur radialement de la surface d'appui, une bague d'étanchéité (23) disposée dans une rainure annulaire et qui peut être appliquée sur la deuxième butée.

9. Dispositif de test selon l'une des revendications précédentes, **caractérisé en ce que** le piston (15) comporte une surface latérale bombée coopérant avec la surface interne (16) cylindrique.

10. Dispositif de test selon l'une des revendications précédentes, **caractérisé en ce qu'**une soupape de purge (32) est raccordée à l'espace interne (18) et avec laquelle l'espace interne (18) peut être relié à l'atmosphère.

11. Dispositif de test selon l'une des revendications précédentes, **caractérisé en ce qu'**il comporte des moyens de centrage pour un centrage dans un dispositif de gonflage de pneumatiques.
